# EUROPÄISCHE PATENTSCHRIFT

(11) **EP 2 607 156 B1**
(45) Veröffentlichungstag und Bekanntmachung des Hinweises auf die Patenterteilung: **26.08.2015**
(21) Anmeldenummer: 12196429.0
(22) Anmeldetag: 11.12.2012
(51) Int. Cl.: B60N 2/58, B60N 2/70

(54) **Fahrzeugsitz, Verfahren zum Herstellen eines Fahrzeugsitzpolsterteils und Verwendung eines Heißpressstempels**
Vehicle seat, method for producing a vehicle seat upholstery part and use of a hot press stamp
Siège de véhicule, procédé de fabrication d'une pièce de rembourrage d'un siège de véhicule et utilisation d'une pièce à matricer à chaud

(30) Priorität: 22.12.2011 DE 102011121993
(43) Veröffentlichungstag der Anmeldung: 26.06.2013
(73) Patentinhaber: GRAMMER AG, 92224 Amberg (DE)
(72) Erfinder: Übelacker, Roland, 92536 Pfreimd (DE); Herbst, Gerald, 92237 Sulzbach-Rosenberg (DE)
(74) Vertreter: Hannke, Christian

(56) Entgegenhaltungen:
- EP-A2- 0 805 064
- DE-A1-102010 009 127
- FR-A1- 2 867 116
- FR-A1- 2 942 423
- GB-A- 2 006 667

## Beschreibung

Die Erfindung betrifft einen Fahrzeugsitz mit einem Sitzteil, mit einem Rückenlehnenteil und mit einem Polsterteil zum Polstern des Sitzteils, bei welchem das Polsterteil eine Materialbahnanordnung zumindest aus einem Polsterbezugelement, aus einem Polsterelement und aus einer Sperrschichtlage sowie ein Hauptpolsterelement umfasst, und bei welchem das Hauptpolsterelement durch die Sperrschichtlage von dem Polsterbezugelement und dem Polsterelement räumlich getrennt angeordnet ist

Daneben betrifft die Erfindung auch ein Verfahren zum Herstellen eines Fahrzeugsitzpolsterteils, bei welchem wenigstens ein Polsterbezugelement, ein Polsterelement und ein Sperrschichtelement zu einer Materialbahnanordnung miteinander verbunden werden, welche anschließend zu einer Oberbaueinheit des Fahrzeugsitzpolsterteils konfektioniert werden kann.

Gattungsgemäße Fahrzeugsitze und Verfahren zum Herstellen diesbezüglicher Fahrzeugsitzpolsterteile sind aus dem Stand der Technik vielfältig und gut bekannt. Bei diesen bekannten Fahrzeugsitzpolsterteilen sind ein Polsterbezugelement und ein Polsterelement oftmals noch mit einer Sperrschichtfolie kaschiert, welche mit einer zusätzlichen Hauptpolsterung des Fahrzeugsitzes bzw. des Fahrzeugsitzpolsterteils hinterschäumt ist, so dass insgesamt ein kompakt bauendes Fahrzeugsitzpolsterteil zur Verfügung steht. Die GB 2 006 667 zeigt einen Fahrzeugsitz mit einem Sitzteil, mit einem Rückenlehnenteil und mit einem Polsterteil zum Polstern des Sitzteils, bei welchem das Polsterteil eine Materialbahnanordnung sowie ein Hauptpolsterelement umfasst.Materialbahnanordnung.

Es ist Aufgabe der Erfindung gattungsgemäße Fahrzeugsitze und insbesondere gattungsgemäße Fahrzeugsitzpolsterteile derart weiterzuentwickeln, dass speziell die Herstellung von Fahrzeugsitzen insgesamt einfacher und damit auch kostengünstiger wird.

Diese Aufgabe der Erfindung wird von einem Fahrzeugsitz gemäß Anspruch 1 gelöst.

Erfindungsgemäß ist vorliegend ein Fahrzeugsitzpolsterteil bereitgestellt, welches mit einer anderen Herstellungsmethode als bisher üblich außergewöhnlich einfach und damit sehr günstig hergestellt werden kann, so dass sich allein hierdurch bereits schon nicht unerhebliche Wettbewerbsvorteile ergeben. Darüber hinaus kann das Polsterteil an den ausgewählten Funktionsbereichen erfindungsgemäß wesentlich einfacher an das Sitzteil und/oder das Rückenlehnenteil des Fahrzeugsitzes montiert werden, da es an diesen Funktionsbereichen andere, sprich verbesserte Dehnbarkeitseigenschaften und/oder Biegbarkeitseigenschaften aufweist. Speziell an seitlichen Wangenpolsterteilen ist es vorteilhaft, wenn das Polsterteil dort insbesondere ein besseres Dehnungsvermögen aufweist als beispielsweise an einem Mittenspiegelbereich einer Sitzfläche des Fahrzeugsitzes.

Der Begriff "Polsterteil" beschreibt im Sinne der Erfindung eine Einrichtung, mittels welcher der Fahrzeugsitz gepolstert werden kann. Insofern kann das Polsterteil an dem Sitzteil und/oder an dem Rückenlehnenteil vorgesehen sein, um den Sitzkomfort für einen Benutzer des Fahrzeugsitzes komfortabler zu gestalteten. Das vorliegende Polsterteil wird vorzugsweise zumindest immer am Sitzteil vorgesehen.

Das Polsterbezugelement kann vorliegend ein für einen Fahrzeugsitz übliches Stoffmaterial, Ledermaterial oder dergleichen umfassen.

Vorzugsweise zeichnet sich das Polsterbezugelement durch eine Dicke zwischen einschließlich 0,3 mm und einschließlich 10 mm bzw. idealerweise durch eine Dicke zwischen einschließlich 0,6 m und einschließlich 6 mm aus.

Damit insbesondere das Polsterbezugelement räumlich gut von einer Unterbaueinheit des Polsterteils, insbesondere von dem Hauptpolsterelement, isoliert werden kann, ist es vorteilhaft, wenn hierfür eine Sperrschichtlage an dem Polsterelement vorgesehen wird.

Der Begriff "Unterbaueinheit" beschreibt im Sinne der Erfindung in seiner Gesamtheit eine Einrichtung des Fahrzeugsitzpolsterteils, mittels welchem es an eine Tragkonstruktion des Fahrzeugsitzes befestigt werden kann. Insofern umfasst die Unterbaueinheit auch Befestigungsmittel, welche in dem Hauptpolsterelement mit eingeschäumt sein können, wie etwa Eisenträger oder dergleichen.

Oberseitig der Unterbaueinheit befindet sich dementsprechend eine Oberbaueinheit des Polsterteils. Der Begriff "Oberbaueinheit" des Polsterteils beschreibt im Sinne der Erfindung eine zumindest aus dem Polsterbezugelement, dem Polsterelement und dem Sperrschichtelement gebildete Materialbahnanordnung des Polsterteils, welche oberhalb des Hauptpolsterelements platziert ist.

Die Sperrschichtlage kann vorliegend sehr einfach bereitgestellt werden, wenn die Sperrschichtlage ein einziges nahtloses Sperrschichtelement aufweist, welches als Bandware an dem Hauptpolsterelement durchgängig angeordnet ist. Der Begriff "nahtlos" beschreibt im Sinne der Erfindung, dass das Sperrschichtelement einstückig ausgebildet ist.

Der Begriff "Bandware" beschreibt im Sinne der Erfindung, dass die Einzelelementbahnen, aus welchen sich die Materialbahnordnung zusammensetzt, jeweils auf einem Coil oder dergleichen aufgerollt vorteilhaft zur Verfügung gestellt werden können. Insofern kann hinsichtlich einer vorliegenden Bandware auch von einer Endlosbandware gesprochen werden. Des Weiteren ist es vorteilhaft, wenn das Sperrschichtelement eine PU-Folie umfasst und insbesondere eine Dicke zwischen 0,25 µm und 1,5 µm aufweist. Es versteht sich, dass auch andere Folien vorteilhaft eingesetzt werden können, sofern sie ausreichend reißfest sind.

Außergewöhnlich vorteilhaft ist es, wenn sich das Polsterteil an den Funktionsbereichen zusätzlich auch noch durch ein besseres Biegevermögen auszeichnet, so dass es in diesen Funktionsbereichen nicht nur wesentlich besser über vorhandene Wangenpolsterteile gezogen sondern darüber hinaus an diesen auch besser gebogen werden kann.

Erfindungsgemäß ist die Materialbahnanordnung an den ausgewählten Funktionsbereichen heißverpresst so dass an den ausgewählten Funktionsbereichen zumindest hinsichtlich des Polsterelements andere Dehnbarkeitseigenschaften und/oder Biegbarkeitseigenschaften vorhanden sind als in den übrigen Bereichen der Materialbahnanordnung.

Insofern ist es vorteilhaft, wenn die ausgewählten Funktionsbereiche mittels eines Heißstempelpressverfahrens hergestellt sind. Mit einem Heißstempelwerkzeug kann insbesondere das Polsterelement verfahrenstechnisch ganz leicht hinsichtlich seiner physikalischen Materialeigenschaften verändert werden, insbesondere komprimiert werden, so dass es an den ausgewählten Funktionsbereichen dünner ausgestaltet ist und es damit dort leichter zu dehnen bzw. zu biegen ist.

Somit kann durch das Polsterelement insbesondere im Mittenspiegelbereich der jeweiligen Sitzfläche auch außerordentlich vorteilhaft sogleich ein Polsterkernelement am Polsterteil geschaffen werden.

Speziell aus den vorstehend genannten Gründen wird die Aufgabe der Erfindung auch von einer Verwendung eines Heißpressstempels zum Herstellen eines Polsterkernelements an einem Fahrzeugsitz bzw. insbesondere an einem Fahrzeugsitzpolsterteil gelöst.

Der Begriff "Heißpressstempel" erfasst im Sinne der Erfindung jegliche Einrichtung, mittels welcher unter Zuhilfenahme von Wärmeenergie und idealerweise auch unter Aufbringung von Druck eine Eigenschaftsänderung der vorliegenden Materialbahnanordnung und insbesondere des Polsterelements hiervon erzielt werden kann.

Vorteilhafter Weise sind keine zusätzlichen Polsterteilelemente zur Formulierung des Polsterkerns erforderlich, wodurch die Herstellung des Fahrzeugsitzes weiter wesentlich vereinfacht ist.

Das Polsterkernelement unterscheidet sich von dem Polsterelement nicht nur in seinen physikalischen Eigenschaften. Es ist zudem noch dicker ausgestaltet als die übrigen Bereiche des Polsterelements.

Es hat sich herausgestellt, dass es zudem vorteilhaft ist, wenn das Polsterkernelement eine Dicke aufweist, welche mehr als das Doppelte, vorzugsweise mehr als das Dreifache, der Dicke des verwendeten Polsterelements beträgt, da hierdurch eine besonders vielfältige Härteabstimmung im Bereich des Polsterkernelements erzielt werden kann.

Des Weiteren ist es vorteilhaft, wenn die Dicke des Polsterkernelements weniger als dreiviertel, vorzugsweise die Hälfte oder weniger, der Dicke des Hauptpolsterelements beträgt.

Hierdurch kann sichergestellt werden, dass dem Polsterteil durch ein ausreichend hohes bzw. dickes Hauptpolsterelement insgesamt noch eine gute Festigkeit und damit eine genügend große Widerstandsfähigkeit und Formstabilität bei Belastung innewohnt, da das Polsterkernelement aufgrund seiner größeren Offenporigkeit weicher ausgelegt ist als das Material des Hauptpolsterelements.

Der Sitzkomfort kann hierbei zusätzlich je nach Einsatzzweck und Beanspruch des Fahrzeugsitzes vorteilhaft eingestellt werden, wenn das Polsterkernelement zudem eine Dicke zwischen einschließlich 3 mm und einschließlich 50 mm, vorzugsweise eine Dicke zwischen einschließlich 15 mm und einschließlich 25 mm, und idealerweise eine Dicke zwischen einschließlich 20 mm und einschließlich 25 mm aufweist.

Die Dicken des Polsterelements bzw. des Polsterkernelements und des Hauptpolsterelements werden im Wesentlichen senkrecht zum Mittenspiegelbereich der in etwa planen Sitzfläche gemessen.

Der Begriff "Polsterkernelement" beschreibt im Sinne der Erfindung einen weiteren Funktionsbereich des Polsterteils, durch welchen auch eine besonders gute Härteabstimmung am Polsterteil, sowohl an dem Sitzteil als auch an dem Rückenlehnenteil des Fahrzeugsitzes, erzielt werden kann.

Vorteilhafter Weise ist das Polsterkernelement aus einem relativ offenporigen und damit auch sehr gut luftdurchlässigen Material realisiert, wodurch insbesondere im Bereich der direkten Sitzfläche, also des Mittenspiegelbereichs des Sitzteils und/oder des Rückenlehnenteils, eine besonders gute Atmungsaktivität am Fahrzeugsitz erreicht werden kann.

Vorzugsweise umfasst das Polsterelement bzw. das Polsterkernelement einen Schnittschaum, einen retikulierten Schaum oder ein Abstandsgewirke, so dass es konstruktiv einfach mit guten Luftdurchlässigkeitseigenschaften realisiert werden kann. Es versteht sich, dass auch andere Materialien zur Anwendung kommen können.

Insofern handelt es sich bei dem vorliegenden Polsterkernelement vorzugsweise um ein im Wesentlichen gut luftdurchlässiges Polsterkernelement.

Vorteilhaft ist es, wenn das insbesondere luftdurchlässige Polsterkernelement einstückig und nur partiell in dem Polsterteil integriert ist, so dass nicht zwingend die gesamte Sitzfläche des Fahrzeugsitzes mit dem Polsterkernelement unterlegt ist. Vorzugsweise erstreckt sich das Polsterkernelement in Längserstreckung des Sitzteils und/oder des Rückenlehnenteils in etwa mittig der Sitzfläche des Sitzteils und/oder des Rückenlehnenteils. Hierdurch können die Herstellungskosten weiter reduziert werden.

Mit dem Begriff "Hauptpolsterelement" wird vorliegend jegliche Einrichtung erfasst, mittels welcher das Sitzteil bzw. das Rückenlehnenteil mit einer Grundpolsterung großflächig bedeckt und gepolstert werden kann. In der Regel wird das Hauptpolsterelement aus einem Reaktionsgemisch, etwa als Kaltschaumbauteil, erzeugt. Es kann jedoch auch aus anderen Materialien hergestellt sein, die sich gut an das Sperrschichtelement anbringen lassen. Insbesondere kann das Hauptpolsterelement auch sehr gut als Heißschaumpolster oder als Vakuumhinterschäumung realisiert sein.

Um bei einem Hinterschäumen insbesondere des Polsterkernelements verhindern zu können, dass ein hierbei eingesetztes Reaktionsgemisch unbeabsichtigt in Poren des Polsterkernelements oder des Polsterelements gelangen kann, ist es vorteilhaft, wenn das Polsterkernelement bzw. das Polsterelement von dem Hauptpolsterelement durch die Sperrschichtlage räumlich getrennt ist.

Ein gewisser Verlust an Offenporigkeit des komprimierten Polsterelements kann an den ausgewählten Funktionsbereichen im Sinne der Erfindung vernachlässigt werden, da die Funktionsbereiche im Wesentlichen an den Wangenpolsterteilen platziert sind und nicht im Mittenspiegelbereich der Sitzfläche, an welchem eine gute Atmungsaktivität durchaus sehr wünschenswert ist.

Die Aufgabe der Erfindung wird demnach auch von einem Verfahren zum Herstellen eines Fahrzeugsitzpolsterteils gelöst, bei welchem wenigstens ein Polsterbezugelement, ein Polsterelement und ein Sperrschichtelement zu einer Materialbahnanordnung miteinander verbunden werden, welche anschließend zu einer Oberbaueinheit des Fahrzeugsitzpolsterteils konfektioniert werden kann, welches sich dadurch auszeichnet, dass die Materialbahnanordnung an ausgewählten Funktionsbereichen mit einem Presswerkzeug heißverpresst wird, um an den ausgewählten Funktionsbereichen andere Materialeigenschaften als in übrigen Bereichen der Materialbahnanordnung zu erhalten.

Die anderen Materialeigenschaften beziehen sich hierbei im Wesentlichen auf das verbesserte Dehnungsvermögen bzw. Biegungsvermögen der Materialbahnanordnung und damit auch der Oberbaueinheit des Polsterteils, was sich speziell auch auf die Herstellung des Fahrzeugsitzes sehr günstig auswirkt.

Ein derartiges Heißpressstempelverfahren wird erfindungsgemäß nicht zum Verbinden der einzelnen Materialbahnen des Polsterteils verwendet, sondern um radial außen am Polsterteil die ausgewählten Funktionsbereiche zu etablieren.

Weist das Polsterelement zwischen zwei voneinander beabstandet angeordneten Funktionsbereichen eine Mittenspiegeldicke auf, welche größer ist als eine Dicke an den Funktionsbereichen, kann das Polsterelement konstruktiv sehr vorteilhaft sogleich ein Polsterkernelement ausgestalten. Hierdurch ist der Aufbau des Polsterteils und damit auch der Oberbaueinheit des Polsterteils sehr einfach strukturiert, wie vorstehend bereits erwähnt.

Sind die ausgewählten Funktionsbereiche seitlich des Sitzteils und sich in Längserstreckung des Sitzteils erstreckend angeordnet, kann sich das Polsterteil insbesondere an die seitlich der Sitzfläche angeordneten Wangenpolsterteile sehr gut anschmiegen.

In diesem Zusammenhang ist es verfahrenstechnisch vorteilhaft, wenn die Materialbahnanordnung an Randbereichen und in Längserstreckung der Materialbahnanordnung heißgepresst wird.

Erfindungsgemäß sind die wenigstens zwei voneinander beabstandeten Funktionsbereiche an bzw. oberhalb Sitzflächenwangenteilen des Fahrzeugsitzes angeordnet.

Ist die Materialbahnanordnung an den ausgewählten Funktionsbereichen ausgehend von der im Wesentlichen planen Sitzfläche oberseitig der Sitzfläche nach schräg oben und anschießend nach unten gebogen weiter runterwärts bis unterseitig der Sitzfläche verlaufend angeordnet, können die radial außen und seitlich des Mittenspiegelbereichs platzierten ausgewählten Funktionsbereiche sehr gut um vorhandene Wangenpolsterteile angeordnet werden.

Vorzugsweise erstreckt sich das vorliegende Polsterkernelement in Längserstreckung des Sitzteils und/oder des Rückenlehnenteils in etwa mittig der Sitzfläche des Sitzteils und/oder des Rückenlehnenteils. Hierdurch können die Herstellungskosten weiter reduziert werden.

Des Weiteren ist es vorteilhaft, wenn das Polsterkernelement in der Oberbaueinheit eingebettet ist und ein einziges Sperrschichtelement zwischen der Oberbaueinheit und der Unterbaueinheit durchgängig angeordnet ist. Hierdurch erfährt speziell die Oberbaueinheit eine besonders gute Stabilität.

In diesem Zusammenhang sei noch erwähnt, dass es auch vorteilhaft ist, wenn das Polsterkernelement auf der dem Hauptpolsterelement abgewandten Seite des Sperrschichtelements angeordnet ist. Hierdurch kann der Herstellungsprozess des Polsterteils wesentlich vereinfacht werden.

Vorzugsweise liegen das Polsterbezugelement, das Polsterelement und das Sperrschichtelement ebenfalls als Bandware vor, so dass die Oberbaueinheit vorteilhafter Weise von entsprechenden Coils oder dergleichen abgerollt und daran anschließend direkt in einem geeigneten Fügeverfahren, wie insbesondere einem thermischen Klebekaschierverfahren, Flammkaschierverfahren oder dergleichen, online zusammengefügt werden können. Hierdurch kann das Herstellungsverfahren für das Polsterteil besonders günstig ausgestaltet werden.

Eine aus der Materialbahnanordnung fertig konfektionierte Oberbaueinheit kann anschließend verfahrenstechnisch einfacher zu einem Polsterteil komplettiert werden, wenn an das Sperrschichtelement ein Hauptpolsterelement als eine Unterbaueinheit des Fahrzeugsitzpolsterbauteils derart angeschäumt wird, dass das Hauptpolsterelement mittels des einzigen Sperrschichtelements vollständig getrennt von allen weiteren der Oberbaueinheitselemente an dem Fahrzeugsitzpolsterteil angeordnet wird.

Darüber hinaus ist es vorteilhaft, wenn das Sperrschichtelement direkt an dem Polsterelement und/oder an dem Hauptpolsterelement angeordnet ist. Einerseits kann das Sperrschichtelement verfahrenstechnisch sehr einfach an dem Polsterelement angebracht werden, wie bereits erläutert. Andererseits kann das Hauptpolsterelement, wie vorstehend erwähnt, verfahrenstechnisch ebenso einfach an das Sperrschichtelement angeschäumt werden.

An dieser Stelle sei noch angemerkt, dass es vorteilhaft ist, wenn das Polsterelement einen Kaschierschaum umfasst und insbesondere eine Dicke zwischen einschließlich 1 mm und einschließlich 10 mm aufweist. Zum einen kann ein Kaschierschaum vorliegend besonders gut zusammen mit dem Sperrschichtelement, etwa als eine vorgefertigte Komponenteneinheit, verarbeitet werden.

Eine weitere sehr vorteilhafte Ausführungsvariante sieht vor, dass das Polsterteil eine Belüftungseinrichtung mit wenigstens einem Belüftungsloch umfasst, welches unterhalb des Polsterkernelements durch das Hauptpolsterelement hindurch bis an das Polsterkernelement oder bis wenigstens an die Sperrschichtlage des Polsterelements heranreicht. Hierdurch kann konstruktiv sehr einfach eine betriebssichere Luftzuführung bezüglich des vorzugsweise luftdurchlässigen Polsterkernelements gewährleistet werden.

Vorteilhafter Weise sind eine Vielzahl an Belüftungslöchern vorgesehen, so dass eine besonders weiträumige und damit gute Belüftung des Polsterkernelements erreicht werden kann.

Weist die Sperrschichtlage des Polsterteils im Bereich der Belüftungseinrichtung, insbesondere im Bereich von Belüftungslöchern der Belüftungseinrichtung, Durchbrüche auf, kann die durch die Belüftungslöcher strömende Luft auch die Sperrschichtlage ohne kritischen Widerstände passieren.

Insofern ist es außergewöhnlich vorteilhaft, wenn zwischen dem Polsterelement bzw. dem Polsterkernelement und dem Hauptpolsterelement eine bereichsweise durchlöcherte Sperrschichtlage angeordnet ist.

Diese Durchbrüche können durch eine geeignete Werkzeugform bereits beim Schäumen eines Reaktionsgemisches oder aber erst nach dem Schäumen, beispielsweise durch Brennen, Stechen, Bohren oder Fräsen, erzeugt werden.

Nach einem weiteren Aspekt der Erfindung wird deren Aufgabe auch von dem vorliegenden Verfahren zum Herstellen eines Fahrzeugsitzpolsterteils gelöst, bei welchem in das Hauptpolsterelement wenigstens ein Belüftungsloch zum Belüften insbesondere des Polsterkernelements eingebracht wird. Durch eine derartige Verfahrensweise kann das Polsterteil für den Fahrzeugsitz trotz Belüftungseinrichtung besonders einfach und kostengünstig verbessert und weiterentwickelt werden.

Um einen besonders guten Luftaustausch zwischen den Belüftungslöchern und dem Polsterkernelement bzw. eine sehr gute Frischluftzufuhr zu dem Polsterkernelement zu erzielen, kann die Sperrschichtlage an den Belüftungslöchern zusätzlich durchstoßen sein, sofern die Sperrschichtlage von Haus aus nicht ausreichend luftdurchlässig ist.

In diesem Zusammenhang wird die Aufgabe der Erfindung auch von einem gattungsgemäßen Fahrzeugsitzpolsterteil gelöst, welches sich dadurch auszeichnet, dass das Fahrzeugsitzpolsterteil einen von einem Hauptpolsterelement verschiedenen zusätzlichen Polsterkernelement aufweist, in dessen mittelbar angrenzenden Bereich das Hauptpolsterelement eine Belüftungseinrichtung zum Belüften des Polsterkernelements aufweist, bei welchem das Polsterkernelement von dem Hauptpolsterelement durch die Sperrschichtlage räumlich getrennt ist, wobei zumindest die Sperrschichtlage an Öffnungen von Belüftungslöchern der Belüftungseinrichtung gegebenenfalls noch durchbrochen ist. Durch einen derartigen vorteilhaften Aufbau kann insbesondere das vorliegende Fahrzeugsitzpolsterteil baulich und herstellungstechnisch besonders einfach bereitgestellt werden.

Nach einem weiteren Aspekt der Erfindung wird deren Aufgabe auch von einer Verwendung eines Hauptpolsterelements eines Fahrzeugsitzpolsterteils als Belüftungseinrichtung eines in der Nähe des Hauptpolsterelements angeordneten Polsterkernelements gelöst, da zum Realisieren einer derartigen Belüftungseinrichtung, mittels welcher insbesondere dem Polsterkernelement vorteilhaft Frischluft zugeführt wird, im Wesentlichen nur das Hauptpolsterelement erforderlich ist, wodurch vorteilhafter Weise auf zusätzliche Belüftungseinrichtungsbauteile an oder in dem Hauptpolsterelement verzichtet werden kann.

Weitere Vorteile, Ziele und Eigenschaften vorliegender Erfindung werden anhand anliegender Zeichnung und nachfolgender Beschreibung erläutert, in welchen beispielhaft ein erfindungsgemäßer Fahrzeugsitz mit einem erfindungsgemäßen Polsterteil dargestellt und beschrieben ist. In der Zeichnung zeigen:
- Figur 1: schematisch eine teilweise geschnittene perspektivische Teilansicht eines Fahrzeugsitzes umfassend ein Polsterteil mit einer heißverpressten Materialbahnanordnung;
- Figur 2: schematisch eine Querschnittsansicht des Polsterteils aus der Figur 1; und
- Figur 3: schematisch eine Ansicht einer bevorzugten Querschnittsform eines alternativen Sitzteils.

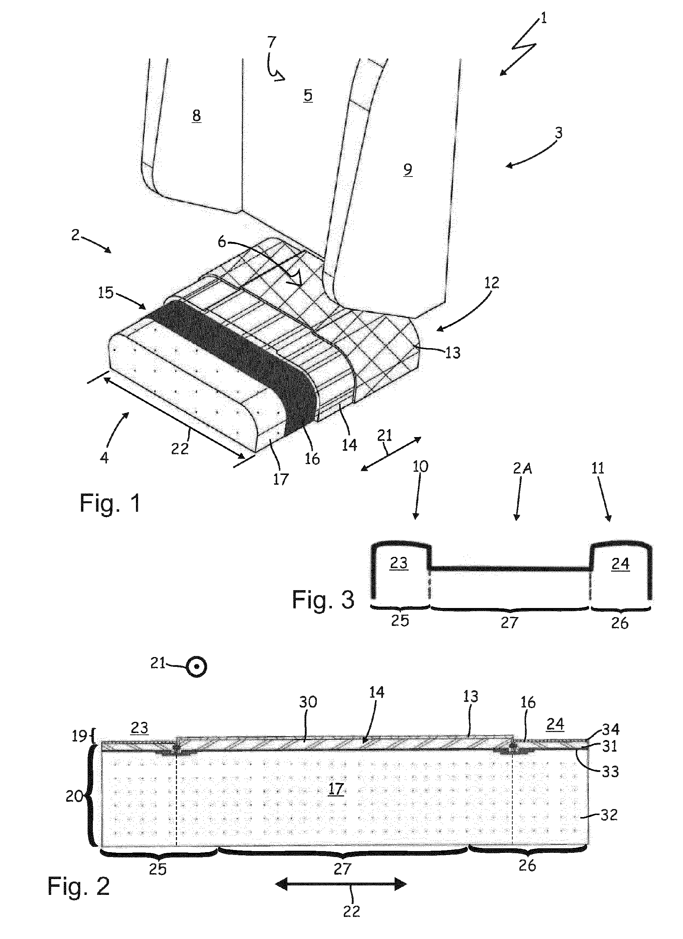

Der in der Figur 1 gezeigte Fahrzeugsitz 1 weist ein Sitzteil 2 und ein Rückenlehnenteil 3 auf. Sowohl das Sitzteil 2 als auch das Rückenlehnenteil 3 sind jeweils durch ein Polsterteil 4 bzw. 5 gepolstert und von diesen dementsprechend bedeckt. Das Polsterteil 4 gestaltet im Wesentlichen eine Sitzflächen 6 des Sitzteils 2 und das Polsterteil 5 gestaltet eine Sitzfläche 7 des Rückenlehnenteils 3 des Fahrzeugsitzes 1 aus. Hinsichtlich des Rückenlehnenteils 3 sind noch seitliche Rückenlehnenteilwangenpolsterteile 8 und 9 dargestellt, welche hinsichtlich des Sitzteils 2 auch vorhanden sind, der Übersichtlichkeit halber jedoch nur als Sitzteilpolsterwangenteile 10 und 11 in der Figur 3 schematisch illustriert sind. Der strukturelle Aufbau der Polsterteile 4 und 5 ist nachstehend stellvertretend lediglich anhand des Polsterteils 4 des Sitzteils 2 erläutert.

Das Polsterteil 4 umfasst im Wesentlichen oberseitig eine Materialbahnanordnung 12 aus einem Polsterbezugelement 13, einem Polsterelement 14 und einer Sperrschichtlage 15 mit einem einzigen Sperrschichtelement 16. Unterseitig umfasst das Polsterteil 4 ein Hauptpolsterelement 17, wobei zwischen dem Polsterelement 14 und dem Hauptpolsterelement 17 das einzige Sperrschichtelement 16 angeordnet ist, so dass das Hauptpolsterelement 17 durch das einzige Sperrschichtelement 16 von dem Polsterelement 14 und dem Polsterteilbezugelement 13 räumlich vollständig getrennt ist.

Das Sperrschichtelement 16, das Polsterelement 14 und das Polsterbezugelement 13 sind hierbei jeweils als Bandware (hier nicht beziffert) gemeinsam mittels eines thermischen Klebekaschierverfahrens zu der Materialbahnanordnung 12 zusammengefügt und gestalten somit in ihrer Gesamtheit eine Oberbaueinheit 19 (siehe Figur 2) des Polsterteils 4 aus, während das Hauptpolsterelement 17 zusammen mit hier nicht weiter dargestellten Komponenten eine Unterbaueinheit 20 (siehe Figur 2) des Polsterteils 4 definiert.

Das Hauptpolsterelement 17 ist derart an dem Sperrschichtelement 16 angeschäumt, dass es vollflächig und damit durchgängig und direkt an dem Hauptpolsterelement 17 anliegt, und zwar sowohl in Längserstreckung 21 des Sitzteils 4 als auch hinsichtlich der Breite 22 des Sitzteils 4 quer zur Längserstreckung 21.

Die Oberbaueinheit 19 ist herstellungstechnisch besonders einfach bereitgestellt, indem die Materialbahnanordnung 12 zumindest bereichsweise einem Heißpressprozess unterzogen wurde. Genauer gesagt, ist die Materialbahnanordnung 12 und insbesondere das Polsterelement 14 hiervon radial außen 23 und 24 mit einem Heißpressstempel (hier nicht gezeigt) heißgepresst, so dass sich dort Funktionsbereiche 25 und 26 ergeben, die sich von einem dazwischen liegenden Mittenspiegelbereich 27 einerseits hinsichtlich ihres Dehnungsvermögens und/oder Biegungsvermögen unterscheiden (siehe speziell Figuren 2 und 3). Andererseits weisen die beiden außenliegenden Funktionsbereiche 25 und 26 eine geringere Dicke auf als der mittig angeordnete Mittenspiegelbereich 27.

Vorteilhafter Weise können die beiden außenliegenden Funktionsbereiche 25, 26 aufgrund ihres besseren Dehnungs- und/oder Biegungsvermögens wesentlich leichter an die Wangenpolsterteile 8, 9 und/oder 10 und 11 angepasst bzw. über diese herüber gezogen werden, so dass ein Verkleiden der Wangenpolsterteile 8, 9 und/oder 10, 11 mit der Oberbaueinheit 19 wesentlich leichter vorgenommen werden kann. Insofern kann hierdurch die Herstellung des Fahrzeugsitzes 1 nochmals vereinfacht werden.

Darüber hinaus gestaltet sich aufgrund der beiden außenliegenden dünneren Funktionsbereiche 25 und 26 im mittig angeordneten Funktionsbereich, also am eigentlichen Mittenspiegelbereich 27 des Fahrzeugsitzes 1, vorteilhafter Weise direkt ein Polsterkernelement 30 aus, durch welches der Sitzkomfort am Fahrzeugsitz 1 nochmals gesteigert werden kann.

Wie insbesondere auch aus der Darstellung gemäß der Figur 2 gut zu erkennen ist, ist das Polsterbezugelement 13 durch das Polsterelement 14 beabstandet von dem Sperrschichtelement 16 angeordnet, wobei das Polsterelement 14 in diesem Ausführungsbeispiel sogleich das Polsterkernelement 30 ausgestaltet, da insbesondere das Polsterelement 14 mittels eines Heißpresswerkzeugs (hier nicht gezeigt) in den Funktionsbereichen 25 und 26 komprimiert ist, so dass am Mittenspiegelbereich 27 ein zusätzlicher Funktionsbereich formuliert ist, in welchem das Polsterelement 14 dicker ausgestaltet ist als in den beiden außenliegenden dünneren Funktionsbereichen 25 und 26.

Das Polsterelement 14 und damit auch das Polsterkernelement 30 bestehen in diesem Ausführungsbeispiel aus einer offenporigen kaltgeschäumten Kaltschaummaterialbahn 31. Durch die Komprimierung dieser Kaltschaummaterialbahn 31 an den beiden außenliegenden Funktionsbereichen 25 und 26 ist die Kaltschaummaterialbahn 31 dort weniger offenporig als in dem Mittenspiegelbereich 27. Zudem kann die Kaltschaummaterialbahn 31 an den Funktionsbereichen 25 und 26 wesentlich leichter gebogen werden.

Das Hauptpolsterelement 17 besteht hingegen aus einem weniger offenporigen, kaltgeschäumten Kaltschaummaterial 32 und es ist demnach härter ausgelegt als insbesondere das Polsterkernelement 30.

Das Sperrschichtelement 15 ist durch eine PU-Folienbahn 33 realisiert.

Das Polsterbezugelement 13 ist aus einer herkömmlichen Stoffmaterialbahn 34 hergestellt.

Vorteilhafter Weise erleichtern die Einzelmaterialbahnen 31, 32, 33 und 34 die Herstellung insbesondere der Oberbaueinheit 19 des Polsterteils 4 erheblich, da diese online zu der Oberbaueinheit 19 miteinander verbunden werden können. Daran kann dann verfahrenstechnisch einfach die Unterbaueinheit 20 in Gestalt des Hauptpolsterelements 17 angeschäumt werden.

Bezugnehmend auf das in der Figur 3 nur schematisch angedeutete alternative Sitzteil 2A wird an dieser Stelle darauf hingewiesen, dass die beiden seitlichen Funktionsbereiche 25 und 26 besonders vorteilhaft über das rechte Sitzteilwangenpolsterteil 10 bzw. das linke Sitzteilwangenpolsterteil 11 gezogen werden können, da das Polsterteil 4 in diesen beiden seitlichen Funktionsbereichen 25 und 26 ein wesentlich größeres Biegungsvermögen bzw. Dehnungsvermögen aufweist als in dem Mittenspiegelbereich 27. Dies liegt insbesondere daran, dass sich das der Oberbaueinheit 19 zugehörige Polsterkernelelement 30 im Wesentlichen nur auf den Mittenspiegelbereich 27 beschränkt und sich seitlich nicht bis in die beiden zusätzlichen Funktionsbereiche 25 und 26 hinein erstreckt, da dort die Kaltschaummaterialbahn 31 vorteilhafter Weise im Heißstempelpressverfahren komprimiert wurde.

Es versteht sich, dass es sich bei dem vorstehend erläuterten Ausführungsbeispiel lediglich um eine erste Ausgestaltung des erfindungsgemäßen Fahrzeugsitzes bzw. des erfindungsgemäßen Fahrzeugsitzpolsterteils handelt. Insofern beschränkt sich die Ausgestaltung der Erfindung nicht auf dieses Ausführungsbeispiel.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Fahrzeugsitz
- 2: Sitzteil
- 2A: alternatives Sitzteil
- 3: Rückenlehnenteil
- 4: Polsterteil des Sitzteils
- 5: Polsterteil des Rückenlehnenteils
- 6: Sitzfläche des Sitzteils
- 7: Sitzfläche des Rückenlehnenteils
- 8: erstes Rückenlehnenteilwangenpolsterteil
- 9: zweites Rückenlehnenteilwangenpolsterteil
- 10: erstes Sitzteilpolsterwangenteil
- 11: zweites Sitzteilpolsterwangenteil
- 12: Materialbahnanordnung
- 13: Polsterbezugelement
- 14: Polsterelement
- 15: Sperrschichtlage
- 16: Sperrschichtelement
- 17: Hauptpolsterelement
- 19: Oberbaueinheit
- 20: Unterbaueinheit
- 21: Längserstreckung
- 22: Breite
- 23: radial rechts außen
- 24: radial links außen
- 25: rechter Funktionsbereich
- 26: linker Funktionsbereich
- 27: Mittenspiegelbereich
- 30: Polsterkernelement
- 31: Kaltschaummaterialbahn
- 32: Kaltschaummaterial
- 33: PU-Folienbahn
- 34: Stoffmaterialbahn

## Patentansprüche

1. Fahrzeugsitz (1) mit einem Sitzteil (2; 2A), mit einem Rückenlehnenteil (3) und mit einem Polsterteil (4) zum Polstern des Sitzteils (2), bei welchem das Polsterteil (4) eine Materialbahnanordnung (12) zumindest aus einem Polsterbezugelement (13), aus einem Polsterelement (14) und aus einer Sperrschichtlage (15) sowie ein Hauptpolsterelement (17) umfasst, und bei welchem das Hauptpolsterelement (17) durch die Sperrschichtlage (15) von dem Polsterbezugelement (13) und dem Polsterelement (14) räumlich getrennt angeordnet ist,
wobei
Materialeigenschaften wenigstens des Polsterelements (14) der Materialbahnanordnung (12) an ausgewählten Funktionsbereichen (25, 26) des Fahrzeugsitzes (1) physikalisch derart verändert sind, dass das Polsterelement (14) an den ausgewählten Funktionsbereichen (25, 26) zumindest andere Dehnbarkeitseigenschaften und/oder Biegungseigenschaften aufweist als in übrigen Bereichen (27) der Materialbahnanordnung (12),
wobei
die Materialbahnanordnung (12) an den ausgewählten Funktionsbereichen (25, 26) heißverpresst ist, so dass an den ausgewählten Funktionsbereichen (25, 26) zumindest hinsichtlich des Polsterelements (14) zumindest andere Dehnbarkeitseigenschaften und/oder Biegungseigenschaften vorhanden sind als in den übrigen Bereichen (27) der Materialbahnanordnung (12), und diese wenigstens zwei voneinander beabstandeten Funktionsbereiche (25, 26) an bzw. oberhalb Sitzflächenwangenteilen (10, 11) des Fahrzeugsitzes (1) angeordnet sind.

2. Fahrzeugsitz (1) nach Anspruch 1,
**dadurch gekennzeichnet, dass**
das Polsterelement (14) eine Mittenspiegeldicke aufweist, welche größer ist als eine Dicke an den Funktionsbereichen (25, 26), um zwischen zwei voneinander beabstandet angeordneten Funktionsbereichen (25, 26) ein Polsterkernelement (30) auszugestalten.

3. Fahrzeugsitz (1) nach einem der Ansprüche 1 bis 2,
**dadurch gekennzeichnet, dass**
die ausgewählten Funktionsbereiche (25, 26) seitlich des Sitzteils (4) und sich in Längserstreckung (21) des Sitzteils (4) erstreckend angeordnet sind.

4. Fahrzeugsitz (1) nach einem der Ansprüche 1 bis 3,
**dadurch gekennzeichnet, dass**
die Materialbahnanordnung (12) an den ausgewählten Funktionsbereichen (25, 26) ausgehend von der im Wesentlichen planen Sitzfläche (6) oberseitig der Sitzfläche (6) nach schräg oben und anschießend nach unten gebogen weiter runterwärts bis unterseitig der Sitzfläche (6) verlaufend angeordnet ist.

5. Fahrzeugsitz (1) nach einem der Ansprüche 1 bis 4,
**dadurch gekennzeichnet, dass**
ausgewählte Funktionsbereiche (25, 26, 27) mittels eines Heißstempelpressverfahrens hergestellt sind.

6. Fahrzeugsitz (1) nach einem der Ansprüche 1 bis 5,
**dadurch gekennzeichnet,dass**
das Hauptpolsterelement (17) an dem Sperrschichtelement (16) angeschäumt angeordnet ist.

7. Verfahren zum Herstellen eines Fahrzeugsitzpolsterteils (4), bei welchem wenigstens ein Polsterbezugelement (13), ein Polsterelement (14) und ein Sperrschichtelement (16) zu einer Materialbahnanordnung (12) miteinander verbunden werden, welche anschließend zu einer Oberbaueinheit (19) des Fahrzeugsitzpolsterteils (4) konfektioniert werden kann,
wobei
die Materialbahnanordnung (12) an ausgewählten Funktionsbereichen (25, 26) mit einem Presswerkzeug heißverpresst wird, um an den ausgewählten Funktionsbereichen (25, 26) andere Materialeigenschaften als in übrigen Bereichen (27) der Materialbahnanordnung (12) zu erhalten,
**dadurch gekennzeichnet, dass**
die Materialbahnanordnung (12) an den ausgewählten Funktionsbereichen (25, 26) heißverpresst wird, so dass an den ausgewählten Funktionsbereichen (25, 26) zumindest hinsichtlich des Polsterelements (14) zumindest andere Dehnbarkeitseigenschaften und/oder Biegungseigenschaften vorhanden sind als in den übrigen Bereichen (27) der Materialbahnanordnung (12), und diese wenigstens zwei voneinander beabstandeten Funktionsbereiche (25, 26) an bzw. oberhalb Sitzflächenwangenteilen (10, 11) des Fahrzeugsitzes (1) angeordnet sind.

8. Verwendung eines Heißpressstempels zum Herstellen eines Polsterkernelements (30) an einem Fahrzeugsitz (1) gemäß Anspruch 1.

## Claims

1. Vehicle seat (1) comprising a seat part (2; 2A), comprising a backrest part (3) and comprising a cushion part (4) for cushioning the seat part (2), in which the cushion part (4) comprises a fabric-web arrangement (12), at least made of a cushion cover (13), a cushion element (14) and a barrier layer (15), and a main cushion element (17), and in which the main cushion element (17) is arranged so as to be spatially separated from the cushion cover (13) and the cushion element (14) by the barrier layer (15),
wherein
material properties at least of the cushion element (14) of the fabric-web arrangement (12) in selected functional regions (25, 26) of the vehicle seat (1) are physically changed in such a way that the cushion element (14) in the selected functional regions (25, 26) has at least stretching properties and/or bending properties which are different from those in other regions (27) of the fabric-web arrangement (12),
the fabric-web arrangement (12) being hot-pressed in the selected functional regions (25, 26) such that in the selected functional regions (25, 26), at least with respect to the cushion element (14), at least stretching properties and/or bending properties are present which are different from those in the other regions (27) of the fabric-web arrangement (12), and these at least two functional regions (25, 26) which are arranged at a distance from one another are arranged on or above sitting surface cheek parts (10, 11) of the vehicle seat (1) respectively.

2. Vehicle seat (1) according to claim 1,
**characterised in that**
the cushion element (14) has a central panel thickness which is greater than a thickness in the functional regions (25, 26) in order to form a cushion core element (30) between two functional regions (25, 26) which are arranged at a distance from one another.

3. Vehicle seat (1) according to either claim 1 or claim 2,
**characterised in that**
the selected functional regions (25, 26) are arranged so as to extend laterally with respect to the seat part (4) and in the longitudinal extension (21) of the seat part (4).

4. Vehicle seat (1) according to any of claims 1 to 3,
**characterised in that**
the fabric-web arrangement (12) in the selected functional regions (25, 26) is arranged so as to extend, starting from the substantially planar sitting surface (6), obliquely upwards on the upper side of the sitting surface (6), and subsequently in a curved manner downwards to the lower side of the sitting surface (6).

5. Vehicle seat (1) according to any of claims 1 to 4,
**characterised in that**
selected functional regions (25, 26, 27) are produced by means of a hot stamping press method.

6. Vehicle seat (1) according to any of claims 1 to 5,
**characterised in that**
the main cushion element (17) is arranged in a foamed manner on the barrier layer element (16).

7. Method for producing a vehicle seat cushion part (4), in which at least one cushion cover (13), one cushion element (14) and one barrier layer element (16) are interconnected to form a fabric-web arrangement (12) which can subsequently be designed to form an upper structural unit (19) of the vehicle seat cushion part (4), the fabric-web arrangement (12) in the selected functional regions (25, 26) being hot-pressed with a pressing tool in order to, in the selected functional regions (25, 26), maintain material properties which are different from those in the other regions (27) of the fabric-web arrangement (12),
**characterised in that**
the fabric-web arrangement (12) is hot-pressed in the selected functional regions (25, 26) in such a way that in the selected functional regions (25, 26), at least with respect to the cushion element (14), at least stretching properties and/or bending properties are present which are different from those in other regions (27) of the fabric-web arrangement (12), and these at least two functional regions (25, 26) which are arranged at a distance from one another are arranged on or above sitting surface cheek parts (10, 11) of the vehicle seat (1) respectively.

8. Use of a hot press stamp for producing a cushion core element (30) on a vehicle seat (1) according to claim 1.

## Revendications

1. Siège de véhicule (1) avec une partie d'assise (2 ; 2A), avec une partie de dossier (3) et avec une partie de rembourrage (4) pour le rembourrage de la partie d'assise (2), dans lequel la partie de rembourrage (4) comprend un ensemble de bandes de matériau (12), constitué d'au moins un élément de revêtement de rembourrage (13), d'un élément de rembourrage (14) et d'une strate de couche de blocage (15), ainsi qu'un élément de rembourrage principal (17) et dans lequel l'élément de rembourrage principal (17) est séparé physiquement par la strate de couche de blocage (15) de l'élément de revêtement de rembourrage (13) et de l'élément de rembourrage (14),
les propriétés du matériau d'au moins l'élément de rembourrage (14) de l'ensemble de bandes de matériau (12) étant modifiées physiquement, au niveau de zones fonctionnelles sélectionnées (25, 26) du siège de véhicule (1), de façon à ce que l'élément de rembourrage (14) comprenne, au niveau des zones fonctionnelles sélectionnées (25, 26), au moins des propriétés de dilatation et/ou propriétés de flexion différentes de celles des autres zones (27) de l'ensemble de bandes de matériau (12),
l'ensemble de bandes de matériau (12) étant pressé à chaud au niveau des zones fonctionnelles sélectionnées (25, 26), de façon à ce que, au niveau des zones fonctionnelles sélectionnées (25, 26), au moins en ce qui concerne l'élément de rembourrage (14), au moins les propriétés de dilatation et/ou propriétés de flexion soient différentes de celles des autres zones (27) de l'ensemble de bandes de matériau (12) et ces, au moins deux, zones fonctionnelles (25, 26) distantes l'une de l'autre sont disposées au niveau ou respectivement au-dessus de parties de joues de surfaces de siège (10, 11) du siège de véhicule (1).

2. Siège de véhicule (1) selon la revendication 1, **caractérisé en ce que** l'élément de rembourrage (14) présente une épaisseur centrale supérieure à une épaisseur au niveau des zones fonctionnelles (25, 26) afin de former, entre deux zones fonctionnelles (25, 26) distantes l'une de l'autre, un élément central de rembourrage (30).

3. Siège de véhicule (1) selon l'une des revendications 1 à 2, **caractérisé en ce que** les zones fonctionnelles sélectionnées (25, 26) s'étendent sur le côté de la partie d'assise (4) et dans l'extension longitudinale (21) de la partie d'assise (4).

4. Siège de véhicule (1) selon l'une des revendications 1 à 3, **caractérisé en ce que** l'ensemble de bandes de matériau (12) s'étend, au niveau des zones fonctionnelles sélectionnées (25, 26), à partir de la partie d'assise (6) globalement plane, sur le côté supérieur de la partie d'assise (6), avec une pliure, dans une direction oblique vers le haut puis vers le bas, en continuant vers le bas jusqu'en dessous de la partie d'assise (6).

5. Siège de véhicule (1) selon l'une des revendications 1 à 4, **caractérisé en ce que** les zones fonctionnelles sélectionnées (25, 26, 27) sont fabriquées à l'aide d'un procédé d'estampage à chaud.

6. Siège de véhicule (1) selon l'une des revendications 1 à 5, **caractérisé en ce que** l'élément de rembourrage principal (17) est moussé au niveau de l'élément à couche de blocage (16).

7. Procédé de fabrication d'une partie rembourrée de siège de véhicule (4), dans lequel au moins un élément de revêtement de rembourrage (13), un élément de rembourrage (14) et un élément à couche de blocage (16) sont reliés ensemble en un ensemble de bandes de matériau (12) qui peut ensuite être transformé en une unité supérieure (19) de la partie rembourrée de siège de véhicule (4),
l'ensemble de bandes de matériau (12) étant pressé à chaud au niveau de zones fonctionnelles sélectionnées (25, 26) avec un outil de pressage, afin d'obtenir, au niveau des zones fonctionnelles sélectionnées (25, 26), des propriétés de matériaux différentes de celles des autres zones (27) de l'ensemble de bandes de matériau (12),
**caractérisé en ce que**
l'ensemble de bandes de matériau (12) est pressé à chaud au niveau des zones fonctionnelles sélectionnées (25, 26) de façon à ce que, au niveau des zones fonctionnelles sélectionnées (25, 26), au moins en ce qui concerne l'élément de rembourrage (14), les propriétés de dilatation et/ou de flexion soient différentes de celles des autres zones (27) de l'ensemble de bandes de matériau (12) et ces au moins deux zones fonctionnelles (25, 26), distantes l'une de l'autre, sont disposées au niveau ou respectivement au-dessus de parties de joues de surfaces de sièges (10, 11) du siège de véhicule (1).

8. Utilisation d'une matrice de pressage à chaud pour la fabrication d'un élément central de rembourrage (30) sur un siège de véhicule (1) selon la revendication 1.
